# EUROPÄISCHE PATENTSCHRIFT

(11) **EP 4 381 255 B1**
(45) Veröffentlichungstag und Bekanntmachung des Hinweises auf die Patenterteilung: **03.09.2025**
(21) Anmeldenummer: 22751105.2
(22) Anmeldetag: 25.07.2022
(51) Int. Cl.: G01F 23/02, G01F 23/284, G01F 15/14

(54) **FENSTER MIT FERROMAGNETISCHER MARKIERUNG FÜR EINE MESSANORDNUNG UND MESSANORDNUNG MIT EINEM SOLCHEN FENSTER**
WINDOW WITH FERROMAGNETIC MARKING FOR A MEASUREMENT ARRANGEMENT AND MEASUREMENT ARRANGEMENT WITH SUCH A WINDOW
FENÊTRE AVEC MARQUAGE FERROMAGNÉTIQUE POUR UN DISPOSITIF DE MESURE ET POUR UN DISPOSITIF AVEC UNE TELLE FENÊTRE

(30) Priorität: 05.08.2021 DE 102021120432
(43) Veröffentlichungstag der Anmeldung: 12.06.2024
(73) Patentinhaber: Endress+Hauser SE+Co. KG, 79689 Maulburg (DE)
(72) Erfinder: KLÖFER, Peter, 79585 Steinen (DE); LOPATIN, Sergey, 79540 Lörrach (DE); THAM, Anh Tuan, 14089 Berlin (DE); FREY, Volker, 79650 Schopfheim (DE); SCHERER, Benjamin, 79254 Oberried (DE)
(74) Vertreter: Endress + Hauser Group Services (Deutschland) AG+Co. KG
(86) Internationale Anmeldenummer: PCT/EP2022/070739
(87) Internationale Veröffentlichungsnummer: WO 2023/011954

(56) Entgegenhaltungen:
- EP-A1- 3 176 547
- WO-A1-2014/026907
- DE-A1- 102014 103 378
- DE-C1- 10 060 069
- US-A1- 2015 214 083

## Beschreibung

Messanordnungen zum Messen von einer Eigenschaft eines Mediums weisen üblicherweise ein Behältnis zum Halten/Führen des Mediums sowie mindestens ein Messgerät auf. Medienberührende Teile des Behältnisses bzw. des Messgeräts können aus praktischen Gründen aus Werkstoffen mit einer Splitterneigung gefertigt sein. Solche Splitter können klein sein, so dass ein teilweises Versagen unbemerkt bleibt.

Aus dem Stand der Technik ist die EP 3 176 547 A1 bekannt geworden, die sich auf ein Gehäuseteil für ein Messgerät mit einem Glas- oder Keramikfenster bezieht.

Aufgabe der Erfindung ist es daher, ein Fenster für eine Messanordnung sowie eine Messanordnung vorzuschlagen, bei welcher ein solches teilweises Versagen erkennbar ist.

Die Aufgabe wird gelöst durch ein Fenster gemäß dem unabhängigen Anspruch 1 und eine Messanordnung gemäß dem unabhängigen Anspruch 5.

Ein erfindungsgemäßes Fenster eingerichtet für eine Messanordnung umfassend ein Behältnis für ein Medium und zumindest ein Messgerät zum Erfassen einer Medieneigenschaft, wobei das Fenster dazu eingerichtet ist, als Bestandteil des Behältnisses oder des Messgeräts eingesetzt zu werden und einen Abschluss zu einem Lumen des Behältnisses zu bilden,
wobei das Fenster einen dielektrischen Werkstoff umfasst,
dadurch gekennzeichnet, dass
das Fenster eine ferromagnetische Markierung aufweist, so dass das Fenster dazu eingerichtet ist, bei einem teilweisen Versagen des Fensters ferromagnetisch markierte Splitter abzugeben.

In einer Ausgestaltung ist die Markierung durch eine Beschichtung einer dem Lumen zuzuwendenden Seite des Fensters mit einer Vielzahl von ferromagnetischen Markierungspartikeln ausgebildet, und/oder
wobei der dielektrische Werkstoff umfasst zumindest im Bereich einer dem Lumen zuzuwendenden Seite eine Vielzahl von ferromagnetischen Markierungspartikeln.

In einer Ausgestaltung ist eine Konzentration der Markierungspartikel definiert durch eine Anzahl A pro Kubikmillimeter,
wobei zumindest in einem Bereich einer Grenzfläche zwischen Medium und dielektrischem Werkstoff A
größer ist als 100, und insbesondere größer ist als 500, und bevorzugt größer ist als 1000
und/oder wobei A
kleiner ist als 1000000, und insbesondere kleiner ist als 50000, und bevorzugt kleiner ist als 10000.

In einer Ausgestaltung ist ein Volumen eines Markierungspartikels jeweils
mindestens 1 Kubikmikrometer
   und/oder
höchstens 100000 Kubikmikrometer ist.

Eine erfindungsgemäße Messanordnung umfasst ein Behältnis für ein Medium sowie ein Messgerät zum Erfassen einer Medieneigenschaft,
wobei das Behältnis und/oder das Messgerät jeweils zumindest ein Fenster zu einem Lumen des Behältnisses aufweisen, wobei das Fenster einen dielektrischen Werkstoff wie beispielsweise ein Glas oder eine Keramik umfasst,
wobei das Fenster eine ferromagnetische Markierung aufweist, welche dazu eingerichtet ist, bei einem teilweisen Versagen Splitter in das Medium abzugeben,
wobei ein Detektor zur Erkennung ferromagnetischer Materialen vorgesehen ist, welcher dazu eingerichtet ist, das Vorliegen von Markierungspartikeln im Medium zu überprüfen.

Ein splittererzeugendes teilweises Versagen eines Bestandteils der Messanordnung kann somit auf einfache Weise erkannt und eine Warnmeldung abgegeben werden.

Ein Behältnis kann beispielsweise ein Tank oder ein Messrohr bzw. eine Rohrleitung sein.

In einer Ausgestaltung ist die Markierung durch eine Beschichtung einer dem Lumen zugewandten Seite des Fensters mit einer Vielzahl von ferromagnetischen Markierungspartikeln ausgebildet,
und/oder
wobei der dielektrische Werkstoff zumindest im Bereich einer dem Lumen zugewandte Grenzfläche eine Vielzahl von ferromagnetischen Markierungspartikeln umfasst.

In einer Ausgestaltung ist eine Konzentration der Markierungspartikel definiert ist durch eine Anzahl A pro Kubikmillimeter,
wobei zumindest in einem Bereich einer Grenzfläche zwischen Medium und dielektrischem Werkstoff A
größer ist als 100, und insbesondere größer ist als 500, und bevorzugt größer ist als 1000
und/oder wobei A
kleiner ist als 1000000, und insbesondere kleiner ist als 50000, und bevorzugt kleiner ist als 10000.

Auf diese Weise kann sichergestellt werden, dass ein ausreichend großer Anteil von entstehenden Splittern zumindest ein Markierungspartikel enthält, so dass ein teilweises Versagen frühzeitig festgestellt werden kann.

Auf diese Weise kann sichergestellt werden, dass die Markierungspartikel im dielektrischen Werkstoff eine nur geringe Beeinflussung des dielektrischen Werkstoffs verursachen.

In einer Ausgestaltung beträgt ein Volumen eines Markierungspartikels jeweils mindestens 1 Kubikmikrometer
und/oder
höchstens 100000 Kubikmikrometer.

Dadurch ist eine gute Detektierbarkeit gegeben. Durch die Obergrenze kann ein störender Einfluss der Markierungspartikel beispielsweise bei einem Sichtfenster ausgeschlossen werden.

In einer Ausgestaltung ist der Detektor im Bereich einer Ableitung des Behältnisses angeordnet.

Dadurch erhöht sich die Wahrscheinlichkeit, dass Splitter erkannt werden.

In einer Ausgestaltung ist der Detektor dazu eingerichtet, Markierungspartikel per Feststellung einer magnetischen Flussdichteänderung zu detektieren.

In einer Ausgestaltung weist der Detektor beispielsweise folgendes auf:
einen Quantenmagnetometer,
einen Fluxgatemagnetometer,
einen Riesenmagnetowiderstandsmagnetometer.

Quantenmagnetometer basieren beispielsweise auf Stickstoff-Vakanz-Zentren in Diamanten, deren spektroskopische Eigenschaften von äußeren Einflüssen wie beispielsweise einem vorliegenden Magnetfeld abhängen. Diese Eigenschaften können dann beispielsweise mittels Mikrowellenstrahlung abgefragt werden, woraus sich Aussagen bezüglich des äußeren Magnetfelds treffen. Solche Quantenmagnetometer zeichnen sich durch eine besondere hohe Empfindlichkeit aus und sind daher vorteilhaft bei der Erkennung solcher Splitter.

In einer Ausgestaltung ist der Detektor dazu eingerichtet, ein Magnetfeld mindestens zwei und insbesondere in drei Richtungen abzutasten.

Auf diese Weise kann vermieden werden, dass ein Splitter einen für den Detektor ungünstig ausgerichtetes Magnetfeld erzeugt, oder ein durch Permanentmagneten erzeugtes Feld verzerrt. Bei asymmetrischen Partikeln kann auch dann eine richtungsabhängige Messung sinnvoll sein.

In einer Ausgestaltung ist das Messgerät ein Druckmessgerät mit einer Druckmesszelle umfassend einen keramischen Werkstoff oder ein Radarfüllstandsmessgerät mit einer Sende- bzw. Empfangsvorrichtung ist, welche Sende- bzw. Empfangsvorrichtung aus einem keramischen Werkstoff gefertigt ist,
wobei der keramische Werkstoff die ferromagnetische Markierung aufweist.

In einer Ausgestaltung weist das Behältnis ein Sichtfenster mit einer ferromagnetischen Markierung auf.

Im Folgenden wird die Erfindung anhand von Ausführungsbeispielen beschrieben.
Fig. 1 zeigt einen Querschnitt durch eine beispielhafte erfindungsgemäße Messanordnung;
Fig. 2 zeigt eine schematische Ausschnittsvergrößerung eines beispielhaften erfindungsgemäßen Fensters.

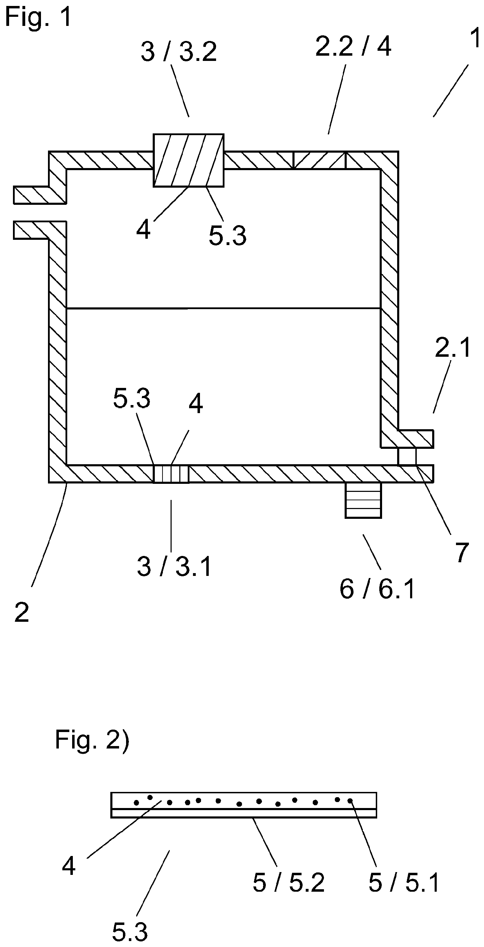

Fig. 1 zeigt eine beispielhafte erfindungsgemäße Messanordnung 1 mit einem Behältnis 2, in welchem sich ein Medium befindet und Messgeräten 3. Das Behältnis kann wie hier gezeigt eine Zuleitung und eine Ableitung 2.1 aufweisen, welche Ableitung wie hier gezeigt mit einem Ventil 7 ausgestattet sein kann. Das Behältnis kann wie hier gezeigt ein Fenster 4 aufweisen, welches als Sichtfenster ausgebildet ist. Wie hier beispielsweise gezeigt kann ein Messgerät als ein Druckmessgerät 3.1 oder als ein berührungsloses Füllstandsmessgerät 3.2 ausgeführt sein. Eine erfindungsgemäße Messanordnung kann auch nur ein Messgerät oder mehr als zwei Messgeräte aufweisen. Messgeräte wie Füllstandsmessgeräte oder Druckmessgeräte weisen üblicherweise ein Fenster 4 hin zu einem Lumen des Behältnisses auf, welches Fenster aus einem dielektrischen Werkstoff wie ein Glas oder eine Keramik auf. Solche Messgeräte mit einem Fenster aus einem dielektrischen Werkstoff sind anfällig für teilweises Versagen, bei welchem Splitter entstehen können. Beispielsweise kann das Fenster bei einem Druckmessgerät als Keramikmembran ausgebildet sein, deren druckabhängige Auslenkung für eine Druckmessung herangezogen wird. Dies kann beispielsweise durch Messung einer elektrischen Kapazität zwischen der Keramikmembran und einem weiteren Bauteil des Druckmessgeräts bewerkstelligt werden.

Erfindungsgemäß weist zumindest ein solches Fenster eine ferromagnetische Markierung 5 auf, welche dazu eingerichtet ist, bei einem teilweisen Versagen des Fensters ferromagnetisch markierte Splitter in das Medium abzugeben. Diese Markierung 5 kann beispielsweise durch eine Beschichtung 5.2 des Fensters bewerkstelligt werden, siehe auch Fig. 2. Alternativ oder zusätzlich kann das Fenster selbst ferromagnetische Markierungspartikel 5.1 aufweisen, siehe Fig. 2.

Erfindungsgemäß weist die Messanordnung zumindest einen Detektor eingerichtet zur Erkennung von ferromagnetischen Markierungspartikeln 5.1 auf, welcher in einer Ausgestaltung beispielsweise als Quantenmagnetometer ausgeführt sein kann. Falls das Behältnis wie hier gezeigt eine Ableitung 2.1 aufweist, ist der Detektor vorteilhafterweise im Bereich der Ableitung angeordnet, da dort eine erhöhte Konzentration von Splittern erwartet werden kann.

Quantenmagnetometer basieren beispielsweise auf Stickstoff-Vakanz-Zentren in Diamanten, deren spektroskopische Eigenschaften von äußeren Einflüssen wie beispielsweise einem vorliegenden Magnetfeld abhängen. Diese Eigenschaften können dann beispielsweise mittels Mikrowellenstrahlung abgefragt werden, woraus sich Aussagen bezüglich des äußeren Magnetfelds treffen. Solche Quantenmagnetometer zeichnen sich durch eine besondere hohe Empfindlichkeit aus und sind daher vorteilhaft bei der Erkennung solcher Splitter.

Alternativ kann das Behältnis auch ein Messrohr sein, welches zum Führen des Mediums eingerichtet ist.

Fig. 2 zeigt eine schematische Ausschnittsvergrößerung eines beispielhaften erfindungsgemäßen Fensters, wobei die ferromagnetische Markierung 5 wie hier beispielsweise gezeigt die Beschichtung 5.2 auf einer einem Lumen des Behältnisses zugewandten Seite des Fensters 4 sowie durch ferromagnetische Markierungspartikel im Fenster ausgebildet ist. Die Markierung 5 kann auch ausschließlich durch die Beschichtung 5.2 oder durch die Markierungspartikel 5.1 ausgebildet sein.

In einer Ausgestaltung weisen die ferromagnetischen Markierungspartikel eine Konzentration definiert durch eine Anzahl A pro Kubikmillimeter auf,
wobei zumindest in einem Bereich einer Grenzfläche zwischen Medium und dielektrischem Werkstoff A
größer ist als 100, und insbesondere größer ist als 500, und bevorzugt größer ist als 1000
und/oder wobei A
kleiner ist als 1000000, und insbesondere kleiner ist als 50000, und bevorzugt kleiner ist als 10000.

Durch die Untergrenze kann sichergestellt werden, dass ein ausreichend großer Anteil von entstehenden Splittern zumindest ein Markierungspartikel enthält, so dass ein teilweises Versagen frühzeitig festgestellt werden kann. Durch die Obergrenze kann sichergestellt werden, dass die Markierungspartikel im dielektrischen Werkstoff eine nur geringe Beeinflussung des dielektrischen Werkstoffs verursachen.

In einer Ausgestaltung ist ein Volumen eines Markierungspartikels 5.1 jeweils mindestens 1 Kubikmikrometer und/oder höchstens 100000 Kubikmikrometer.

Auf diese Weise kann sichergestellt werden, dass die Markierungspartikel im dielektrischen Werkstoff eine nur geringe Beeinflussung des dielektrischen Werkstoffs verursachen.

Durch die Untergrenze kann eine ausreichende magnetische Wirkung sichergestellt werden, durch die Obergrenze kann sichergestellt werden, dass die Markierungspartikel im dielektrischen Werkstoff eine nur geringe Beeinflussung des dielektrischen Werkstoffs verursachen.

## Patentansprüche

1. Fenster (4) eingerichtet für eine Messanordnung umfassend ein Behältnis (2) für ein Medium und zumindest ein Messgerät (3) zum Erfassen einer Medieneigenschaft, wobei das Fenster dazu eingerichtet ist, als Bestandteil des Behältnisses oder des Messgeräts eingesetzt zu werden und einen Abschluss zu einem Lumen des Behältnisses zu bilden,
wobei das Fenster einen dielektrischen Werkstoff umfasst,
**dadurch gekennzeichnet, dass**
das Fenster eine ferromagnetische Markierung (5) aufweist, welches Fenster dazu eingerichtet ist, bei einem teilweisen Versagen des Fensters ferromagnetisch markierte Splitter abzugeben.

2. Fenster nach Anspruch 1,
wobei die Markierung durch eine Beschichtung (5.2) einer dem Lumen zuzuwendenden Seite des Fensters (5.3) mit einer Vielzahl von ferromagnetischen Markierungspartikeln (5.1) ausgebildet ist,
und/oder
wobei der dielektrische Werkstoff zumindest im Bereich einer dem Lumen zuzuwendenden Seite (5.3) eine Vielzahl von ferromagnetischen Markierungspartikeln (5.1) umfasst.

3. Fenster nach Anspruch 2,
wobei eine Konzentration der Markierungspartikel (5.1) definiert ist durch eine Anzahl A pro Kubikmillimeter,
wobei zumindest in einem Bereich einer Grenzfläche zwischen Medium und dielektrischem Werkstoff A
größer ist als 100, und insbesondere größer ist als 500, und bevorzugt größer ist als 1000
und/oder wobei A
kleiner ist als 1000000, und insbesondere kleiner ist als 50000, und bevorzugt kleiner ist als 10000.

4. Fenster nach einem der vorigen Ansprüche,
wobei ein Volumen eines Markierungspartikels (5.1) jeweils
mindestens 1 Kubikmikrometer
und/oder
höchstens 100000 Kubikmikrometer ist.

5. Messanordnung (1) umfassend ein Behältnis (2) für ein Medium sowie ein Messgerät (3) zum Erfassen einer Medieneigenschaft,
wobei das Behältnis und/oder das Messgerät jeweils zumindest ein Fenster (4) gemäß einem der vorigen Ansprüche zu einem Lumen des Behältnisses aufweist, welches Fenster einen dielektrischen Werkstoff wie beispielsweise ein Glas oder eine Keramik umfasst,
**dadurch gekennzeichnet, dass**
das Fenster eine ferromagnetische Markierung (5) aufweist, welche dazu eingerichtet ist, bei einem teilweisen Versagen des Fensters ferromagnetisch markierte Splitter in das Medium abzugeben.

6. Messanordnung nach Anspruch 5,
wobei ein Detektor (6) zur Erkennung ferromagnetischer Materialien vorgesehen ist, welcher dazu eingerichtet ist, das Vorliegen von Markierungspartikeln im Medium zu überprüfen,
wobei der Detektor (6) insbesondere im Bereich einer Ableitung (2.1) des Behältnisses angeordnet ist.

7. Messanordnung nach Anspruch 6,
wobei der Detektor (6) dazu eingerichtet ist, Markierungspartikel per Feststellung einer magnetischen Flussdichteänderung zu detektieren.

8. Messanordnung nach Anspruch 7,
wobei der Detektor beispielsweise folgendes aufweist:
einen Quantenmagnetometer (6.1) beispielsweise basierend auf Stickstoff-Vakanz-Zentren in einem Diamanten,
einen Fluxgatemagnetometer,
einen Riesenmagnetowiderstandsmagnetometer.

9. Messanordnung nach einem der Ansprüche 6 bis 8,
wobei der Detektor (6) dazu eingerichtet ist, ein Magnetfeld in mindestens zwei und insbesondere drei Richtungen abzutasten.

10. Messanordnung nach einem der vorigen Ansprüche 5 bis 9,
wobei das Messgerät ein Druckmessgerät (3.1) mit einer Druckmesszelle umfassend einen keramischen Werkstoff oder ein Radarfüllstandsmessgerät (3.2) mit einer Sende- bzw. Empfangsvorrichtung ist, welche Sende- bzw. Empfangsvorrichtung aus einem keramischen Werkstoff gefertigt ist,
wobei der keramische Werkstoff die ferromagnetische Markierung aufweist.

11. Messanordnung nach einem der vorigen Ansprüche 5 bis 10,
wobei das Fenster ein Sichtfenster (2.2) ist.

## Claims

1. A window (4) configured for a measurement arrangement comprising a container (2) for a medium and at least one measuring device (3) for detecting a media property, wherein the window is configured to be used as a component of the container or the measuring device, and to form an end piece for a lumen of the container,
wherein the window comprises a dielectric material, **characterized in that** the window has a ferromagnetic marking (5), said window being configured to release ferromagnetically marked fragments if the window partially fails.

2. The window as claimed in claim 1,
wherein the marking is formed by a coating (5.2) of a side of the window (5.3) facing toward the lumen with a number of ferromagnetic marker particles (5.1), and/or
wherein the dielectric material comprises a number of ferromagnetic marker particles (5.1) at least in the area of a side (5.3) facing toward the lumen.

3. The window as claimed in claim 2,
wherein a concentration of the marker particles (5.1) is defined by a number A per cubic millimeter,
wherein at least in an area of a boundary surface between the medium and the dielectric material, A is
greater than 100, and in particular is greater than 500, and preferably is greater than 1000,
and/or wherein A
is less than 1,000,000, and in particular is less than 50,000, and preferably is less than 10,000.

4. The window as claimed in one of the preceding claims,
wherein a volume of a marker particle (5.1) is in each case at least 1 cubic micrometer and/or
is at most 100,000 cubic micrometers.

5. A measurement arrangement (1) comprising a container (2) for a medium and a measuring device (3) for detecting a media property,
wherein the container and/or the measuring device in each case has/have at least one window (4) as claimed in one of the preceding claims to a lumen of the container, said window comprising a dielectric material such as a glass or a ceramic,
**characterized in that**
the window has a ferromagnetic marking (5) which is configured to release ferromagnetically marked fragments into the medium if the window partially fails.

6. The measurement arrangement as claimed in claim 5,
wherein a detector (6) for detecting ferromagnetic materials is provided, which is configured to check the presence of marker particles in the medium,
wherein the detector (6) is, in particular, arranged in the area of an outlet (2.1) of the container.

7. The measurement arrangement as claimed in claim 6,
wherein the detector (6) is configured to detect marker particles by recognizing a change in the density of the magnetic flux.

8. The measurement arrangement as claimed in claim 7,
wherein the detector has the following, for example:
A quantum magnetometer (6.1), for example based on nitrogen-vacancy centers in a diamond,
a fluxgate magnetometer,
a giant magnetoresistance magnetometer.

9. The measurement arrangement as claimed in one of claims 6 to 8,
wherein the detector (6) is configured to scan a magnetic field in at least two and in particular three directions.

10. The measurement arrangement as claimed in one of preceding claims 5 to 9,
wherein the measuring device is a pressure measuring device (3.1) with a pressure measuring cell comprising a ceramic material, or a radar fill level measuring device (3.2) with a transmitting and/or receiving device, said transmitting and/or receiving device being made from a ceramic material,
wherein the ceramic material has the ferromagnetic marking.

11. The measurement arrangement as claimed in one of preceding claims 5 to 10, wherein the window is an inspection window (2.2).

## Revendications

1. Fenêtre (4) conçue pour un dispositif de mesure comprenant un réservoir (2) pour un produit et au moins un appareil de mesure (3) destiné à la mesure d'une propriété du produit,
la fenêtre étant conçue pour être utilisée comme partie intégrante du réservoir ou de l'appareil de mesure et pour former une fermeture vers un canal intérieur du réservoir,
la fenêtre comprenant un matériau diélectrique,
**caractérisée en ce que**
la fenêtre comporte un marquage ferromagnétique (5), laquelle fenêtre étant conçue pour délivrer des éclats marqués ferromagnétiquement en cas de défaillance partielle de la fenêtre.

2. Fenêtre selon la revendication 1,
pour laquelle le marquage est formé par un revêtement (5.2) - d'un côté de la fenêtre (5.3) tourné vers le canal intérieur - avec une pluralité de particules de marquage ferromagnétiques (5.1),
et/ou
pour laquelle le matériau diélectrique comprend - au moins dans la zone d'un côté (5.3) tourné vers le canal intérieur - une pluralité de particules de marquage ferromagnétiques (5.1).

3. Fenêtre selon la revendication 2,
pour laquelle une concentration des particules de marquage (5.1) est définie par un nombre A par millimètre cube,
A étant - au moins dans une zone d'une interface entre le produit et le matériau diélectrique -
supérieur à 100, notamment supérieur à 500, et de préférence supérieur à 1 000 et/ou
inférieur à 100 0000, notamment inférieur à 50 000, et de préférence inférieur à 10 000.

4. Fenêtre selon l'une des revendications précédentes,
pour laquelle un volume d'une particule de marquage (5.1) est respectivement au moins 1 micromètre cube
et/ou
au maximum 100 000 micromètres cubes.

5. Dispositif de mesure (1) comprenant un réservoir (2) pour un produit ainsi qu'un appareil de mesure (3) destiné à la détection d'une propriété du produit,
le réservoir et/ou l'appareil de mesure présentant chacun au moins une fenêtre (4) selon l'une des revendications précédentes vers un canal intérieur du réservoir, laquelle fenêtre comprend un matériau diélectrique tel qu'un verre ou une céramique,
**caractérisé en ce que**
la fenêtre comporte un marqueur ferromagnétique (5), lequel marqueur est conçu pour libérer des éclats marqués ferromagnétiquement dans le produit en cas de défaillance partielle de la fenêtre.

6. Dispositif de mesure (1) selon la revendication 5,
pour lequel un détecteur (6) est prévu pour la détection de matériaux ferromagnétiques, lequel détecteur est conçu pour vérifier la présence de particules de marquage dans le produit,
le détecteur (6) étant disposé notamment dans la zone d'une dérivation (2.1) du réservoir.

7. Dispositif de mesure selon la revendication 6,
pour lequel le détecteur (6) est conçu pour détecter des particules de marquage par détection d'une variation de densité de flux magnétique.

8. Dispositif de mesure selon la revendication 7,
pour lequel le détecteur comprend, par exemple, ce qui suit :
un magnétomètre quantique (6.1), par exemple basé sur des centres de vacance d'azote dans un diamant,
un magnétomètre fluxgate,
un magnétomètre géant à magnétorésistance.

9. Dispositif de mesure selon l'une des revendications 6 à 8,
pour lequel le détecteur (6) est conçu pour balayer un champ magnétique dans au moins deux directions, notamment dans trois directions.

10. Dispositif de mesure selon l'une des revendications 5 à 9,
pour lequel l'appareil de mesure est un transmetteur de pression (3.1) avec une cellule de mesure de pression comprenant un matériau céramique, ou un transmetteur de niveau radar (3.2) avec un dispositif d'émission et de réception, lequel dispositif d'émission et de réception est fabriqué en un matériau céramique,
le matériau céramique présentant le marquage ferromagnétique.

11. Dispositif de mesure selon l'une des revendications 5 à 10,
pour lequel la fenêtre est une fenêtre d'inspection (2.2).
